# EUROPÄISCHE PATENTSCHRIFT

(11) **EP 2 213 528 B1**
(45) Veröffentlichungstag und Bekanntmachung des Hinweises auf die Patenterteilung: **09.05.2012**
(21) Anmeldenummer: 10000330.0
(22) Anmeldetag: 15.01.2010
(51) Int. Cl.: B60R 21/38

(54) **Dämpfungseinrichtung an einer Frontklappe eines Kraftfahrzeugs**
Damping device for the bonnet of a motor vehicle
Dispositif d'amortissement d'un capot de véhicule à moteur

(30) Priorität: 28.01.2009 DE 102009006451
(43) Veröffentlichungstag der Anmeldung: 04.08.2010
(73) Patentinhaber: Bayerische Motoren Werke, 80809 München (DE)
(72) Erfinder: Köstler, Ulrich, 85241 Hebertshausen (DE); Köhler, Arne, 85652 Pliening (DE); Drexl, Thomas, 80801 München (DE)

(56) Entgegenhaltungen:
- EP-A1- 1 090 819
- EP-A1- 2 025 565
- DE-A1- 10 345 719
- DE-A1-102004 004 986
- DE-A1-102005 016 324

## Beschreibung

Die Erfindung betrifft eine Dämpfungseinrichtung an einer Frontklappe eines Kraftfahrzeugs, mit den jeweils im Oberbegriff der unabhängigen Patentansprüche 1 und 2 angegebenen Merkmalen.

Eine derartige Dämpfungseinrichtung sieht in der DE 103 45 719 A1 vor, dass bei einem durch die Verstelleinrichtung bewirkten Hochstellen der Frontklappe in die Fußgängerschutzlage in einem Verstellbereich vor dem Erreichen der Fußgängerschutzlage ein Dämpfungskolben axial in eine Ausnehmung in einem Führungszylinder eingreift, der in einem Außenzylinder angeordnet ist. Bei dem weiteren Hochstellen der Frontklappe in die Fußgängerschutzlage komprimiert der Dämpfungskolben das in dem Führungszylinder befindliche Gasvolumen, das über eine Drosselöffnung in den von dem Außenzylinder umschlossenen Druckraum strömt, wodurch an der Frontklappe eine die Hochstellgeschwindigkeit der Frontklappe vermindernde Dämpfungskraft bewirkt wird. Der mit der Frontklappe oder der Karosserie fest verbundene Außenzylinder weist einen von einem gasförmigen Medium druckbelasteten Arbeitsraum auf.

Die DE 103 45 719 A1 geht von einem nächstkommenden Stand der Technik aus, bei dem eine Klappeneinheit, bei der die Klappe insbesondere die frontseitige Motorhaube eines Kraftfahrzeugs ist, einem Fußgängerschutz dient. Hierzu wird kurz vor einer Kollision mit einem Hindernis, insbesondere einer Person, die von einer Sensorik erkannt wird, die Motorhaube von einer Verstelleinrichtung in eine erhöhte Anhubposition verstellt. Damit die Klappe sicher in die Anhubposition verstellt ist, bevor ein Aufprall des Hindernisses erfolgt, muss die Klappe sehr schnell in die Anhubposition verstellt werden, die dann in der Anhubposition eine hohe kinetische Energie aufweist. Dies kann zu einer Beschädigung der Klappe oder deren Anlenkpunkte führen.

In der DE 10 2005 016 324 A1 ist an einer Frontklappe eines Kraftfahrzeugs eine Dämpfungseinrichtung vorgesehen, die nach einem eingetretenen oder von einer Sensoreinrichtung erfassten bevorstehenden Aufprall eines Fußgängers auf die Frontklappe von einer Verstelleinrichtung zumindest bereichsweise in eine erhöhte Fußgängerschutzlage hochgestellt wird. In der Fußgängerschutzlage der Frontklappe kann eine unter der Frontklappe angeordnete Federungs- und/oder Dämpfungseinrichtung einen Aufprall beispielsweise eines Fußgängers auf die Frontklappe abfedern und/oder dämpfen und dadurch Verletzungen des Fußgängers vermeiden oder abschwächen. Damit bei dem beispielsweise durch einen pyrotechnischen Aktuator bewirkten Hochstellen der Frontklappe in die Fußgängerschutzlage die Frontklappe nicht zu Schwingungen um die Fußgängerschutzlage angeregt wird, ist ein Schwingbewegungen der Frontklappe vermeidendes oder abschwächendes Dämpfungsglied vorgesehen, das durch ein zwischen der Frontklappe und der Karosserie angeordnetes Band oder Seil gebildet ist. Eine Schwingbewegung der Frontklappe um die Fahrzeugschutzlage würde die Dämpfungswirkung der Dämpfungseinrichtung zumindest herab setzen, wenn der unfallbedingte Aufprall auf die Frontklappe in einer nach oben gerichteten Schwingphase der Frontklappe erfolgt. Das Band oder Seil soll durch eine über die Strecklage hinaus gehende Streckung eine Dämpfungskraft an der Frontklappe bewirken. Bei einem wenig elastischen Band oder Seil dürfte die Dämpfkraft lediglich in einem geringen Höhenverstellbereich der Frontklappe wirksam sein. Beim Hochstellen der Frontklappe in die Fußgängerschutzlage dürfte das Band oder Seil eine eher schlagartig einsetzende Dämpfungskraft an der Frontklappe bewirken, wenn das Band oder Seil seine gestreckte Lage erreicht hat. Die schlagartig einsetzende Dämpfungskraft des Dämpfungsgliedes dürfte die Frontklappe zusätzlich zu Schwingbewegungen anregen. Das Band oder Seil kann bei normal geschlossener Frontklappe zumindest bereichsweise durchhängen und insbesondere beim Überfahren von Bodenunebenheiten an benachbarten Bauteilen oder Wänden anschlagen und dabei störende Geräusche verursachen.

Der Erfindung liegt die Aufgabe zu Grunde, eine Dämpfungseinrichtung an einer Frontklappe eines Kraftfahrzeugs mit den Merkmalen jeweils im Oberbegriff der unabhängigen Patentansprüche 1 und 2 anzugeben, die einen einfachen Aufbau aufweist und eine genauer einstellbare Dämpfungswirkung an der Frontklappe ermöglicht.

Diese Aufgabe ist jeweils durch die in den unabhängigen Patentansprüchen 1 und 2 angegebenen Merkmale gelöst. Vorteilhafte Ausgestaltungen der Erfindung sind den Unteransprüchen entnehmbar.

Die erfindungsgemäße Dämpfungseinrichtung weist gemäß dem unabhängigen Patentanspruch 1 an einer von einer Verstelleinrichtung in eine Fußgängerschutzlage hochstellbaren Frontklappe eines Kraftfahrzeugs eine Dämpfungseinrichtung auf, die neben den im Oberbegriff genannten Merkmalen vorsieht, dass entweder die Kolbenstange oder der Führungszylinder in einem Außenzylinder axial innerhalb eines dem vorgegebenen Anfangsverstellweg entsprechenden Verstellweges zwischen Anschlägen frei verstellbar ist. Die Dämpfungswirkung des Dämpfungsgliedes setzt dann ein, wenn das zwischen Anschlägen frei verstellbare Teil, die Kolbenstange oder der Führungszylinder, bei einem durch die Verstelleinrichtung bewirkten Anheben der Frontklappe an dem betreffenden Anschlag zur Anlage kommt. Dabei ist nicht erforderlich, dass der Außenzylinder einen von einem gasförmigen Medium druckbelasteten Arbeitsraum aufweist. Bei der Dämpfungseinrichtung ist der Führungszylinder oder der Dämpfungskolben nicht ständig entweder mit der Frontklappe oder der Karosserie verbunden, sondern kann in einem maximal dem Abstand zwischen den Anschlägen entsprechenden Verstellweg gegenüber der betreffenden Frontklappe oder Karosserie verstellt werden.

Gemäß dem unabhängigen Patentanspruch 2 sieht die erfindungsgemäße Dämpfungseinrichtung neben den Merkmalen im Oberbegriff des Patentanspruches 2 vor, dass der Führungszylinder oder eine von dem Dämpfungskolben axial durch eine stirnseitige Öffnung im Führungszylinder nach außen geführte Kolbenstange an einer Anlenkstelle an einem Schwenkhebel angelenkt ist, der innerhalb eines Schwenkwinkelbereiches derart zwischen Anschlägen frei schwenkbar ist, dass der Verstellweg des Schwenkhebels an der Anlenkstelle in Achsrichtung des Führungszylinders dem vorgegebenen Anfangsverstellweg entspricht. Der Führungszylinder oder die Kolbenstange ist entweder an der Frontklappe oder an der Karosserie und der Schwenkhebel an dem anderen Teil, entweder an der Karosserie oder an der Frontklappe angelenkt.

Zwei Ausführungsbeispiele der Erfindung werden anhand einer Zeichnung näher erläutert. Es zeigen
- Fig. 1: eine vereinfachte Seitenansicht eines ersten Ausführungsbeispiels bei teilweise in die Fußgängerschutzlage hochgestellter Frontklappe und
- Fig. 2: eine Fig. 1 entsprechende Ansicht eines zweiten Ausführungsbeispiels bei teilweise in die Fußgängerschutzlage hochgestellter Frontklappe

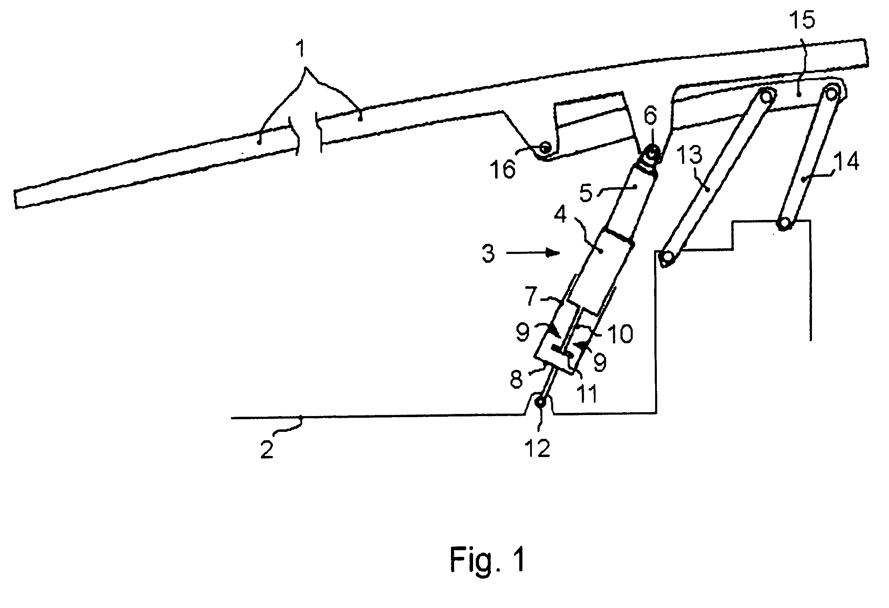

Die in Fig. 1 entsprechend einer Prinzipskizze in einer vereinfachten Seitenansicht dargestellte Dämpfungseinrichtung ist jeweils an beiden hinteren Seitenbereichen der Frontklappe 1 eines Kraftfahrzeugs verwendet. Die in ihrer nicht dargestellten Schließlage etwa horizontal angeordnete und von wenigstens einem nicht dargestellten Schloss im vorderen Frontklappenbereich arretierte Frontklappe 1 ist bei einem eingetretenen oder von einer nicht abgebildeten Sensoreinrichtung erfassten bevorstehenden Aufprall beispielsweise eines Fußgängers auf die Frontklappe 1 von einer ebenfalls nicht dargestellten Verstelleinrichtung zumindest bereichsweise in eine Fußgängerschutzlage hochstellbar, in der eine nicht abgebildete, unter der Frontklappe 1 angeordnete Federungs- und/oder Dämpfungseinrichtung einen Aufprall beispielsweise eines Fußgängers auf die Frontklappe 1 abfedert und/oder dämpft und dadurch Verletzungen des Fußgängers verhindert oder abschwächt. Bei dem Ausführungsbeispiel wird von der Verstelleinrichtung im Wesentlichen der hintere Bereich der Frontklappe 1 in die Fußgängerschutzlage verstellt, wobei die Frontklappe 1 vorne von dem wenigstens einen Schloss verriegelt bleibt, das im Verriegelungszustand eine in Fahrzeugquerrichtung angeordnete Schwenkachse für die Frontklappe 1 bildet oder die Frontklappe 1 gegenüber einer Bewegung in Fahrzeuglängsrichtung fixiert und eventuell eine Höhenbewegung des vorderen Bereiches der Frontklappe 1 ermöglicht.

Die Frontklappe 1 ist in Fig. 1 in einer Lage dargestellt, in der die Frontklappe 1 von der Verstelleinrichtung aus der Schließlage teilweise in Richtung der Fußgängerschutzlage hochgestellt ist. Die Dämpfungseinrichtung weist ein zwischen der Karosserie 2 des Kraftfahrzeugs und der Frontklappe 1 angeordnetes Dämpfungsglied 3 auf, das so ausgelegt ist, dass das Dämpfungsglied 3 eine durch die Verstelleinrichtung bewirkte Verlagerung der Frontklappe 1 in die Fußgängerschutzlage erst nach einem vorgegebenen Anfangsverstellweg dämpft.

Hierzu weist das Dämpfungsglied 3 einen in einem Führungszylinder 4 axial verstellbaren, nicht dargestellten Dämpfungskolben auf. Der Dämpfungskolben ist mit einer Kolbenstange 5 verbunden, die durch eine stirnseitige Öffnung im Führungszylinder 4 axial nach außen geführt und an einem unteren Bereich der Frontklappe 1 um eine in Fahrzeugquerrichtung verlaufende Querachse 6 schwenkbar angelenkt ist.

Bei dem Ausführungsbeispiel ist der Führungszylinder 4 in einem Außenzylinder 7 axial innerhalb eines dem vorgegebenen Anfangsverstellweg entsprechenden Verstellweges zwischen Anschlägen 8, 9 frei verstellbar. In einer vereinfachten Ausführung ist hierzu der Führungszylinder 4 axial außen über eine Zwischenstange 10 mit einem radial erweiterten Kopfteil 11 verbunden, das zwischen den Anschlägen 8, 9 axial verstellbar ist. Ein Anschlag 8 ist durch den Boden des Außenzylinders 7 gebildet. Der andere Anschlag 9 ist durch eine Stützscheibe gebildet, die an einem Innenwandbereich des Außenzylinders 4 befestigt ist. Dieser andere Anschlag 9 weist einen von dem Innenwandbereich des Außenzylinders 7 radial nach innen gerichteten Wandbereich auf, der eine axiale Stützfläche für das Kopfteil 11 bildet.

Der Außenzylinder 7 ist axial außen an der Karosserie 2 des Kraftfahrzeugs um eine Querachse 12 schwenkbar angelenkt, die im Wesentlichen in Fahrzeugquerrichtung verläuft.

Der nicht dargestellte Dämpfungskolben der Dämpfungseinrichtung ist zwischen zwei in den Figuren nicht erkennbaren Arbeitsräumen des Führungszylinders 4 angeordnet. Wenigstens eine Drosselöffnung in dem nicht dargestellten Dämpfungskolben verbindet die beiden Arbeitsräume, die von einer Druckeinrichtung und/oder von einem Druckspeicher druckbelastet oder druckbelastbar sind. Der nicht dargestellte Dämpfungskolben ist als Differenzdruckkolben ausgebildet, der bei einer gemeinsamen Druckbelastung der Arbeitsräume die von dem Dämpfungskolben abstehende Kolbenstange 5 axial nach außen belastet. Bei dem Ausführungsbeispiel sind beide Arbeitsräume des Führungszylinders 4 ständig druckbelastet.

Die Frontklappe 1 ist bei dem Ausführungsbeispiel im hinteren Bereich über zwei ein Viergelenk bildende Lenker 13, 14 zwischen der normalen Schließlage der Frontklappe 1 und der Fußgängerschutzlage höhenverstellbar. Das zur schwenkbaren Verbindung der Lenker 13, 14 vorgesehene Koppelelement 15 ist mit der Frontklappe 1 beispielsweise an der Stelle 16 um eine Fahrzeugquerachse schwenkbar verbunden.

Der axiale Abstand der Anschläge 8, 9 ist so bemessen, dass der vorgegebene Anfangsverstellweg einem größeren Bereich des Weges des verstellbaren Bereiches der Frontklappe 1 von der Schließlage der Frontklappe 1 in die Fußgängerschutzlage entspricht.

Beim Verstellen der geschlossenen Frontklappe 1 in die erhöhte Fußgängerschutzlage durch die Verstelleinrichtung verhindert das Dämpfungsglied 3 ein Überschwingen der Frontklappe 1 über die Fußgängerschutzlage oder lässt allenfalls ein geringes Überschwingen der Frontklappe über die Fußgängerschutzlage zu. Hierzu ist das Dämpfungsglied 3 in seiner Dämpfungswirkung entsprechend eingestellt. Damit das durch eine Sensoreinrichtung ausgelöste Hochstellen der Frontklappe 1 in die Fußgängerschutzlage durch die Verstelleinrichtung vorzugsweise vor dem Aufprall beispielsweise eines Fußgängers auf die Frontklappe 1 beispielsweise durch einen pyrotechnisch wirkenden Aktuator möglichst rasch erfolgen kann, ist der axiale Abstand der Anschläge 8, 9, der den axialen Verstellweg des mit dem Führungszylinder 4 verbundenen Kopfteiles 11 zwischen den Anschlägen 8, 9 bestimmt, entsprechend festgelegt. Beispielsweise ist der den vorgegebenen Anfangsverstellweg bestimmende Abstand der Anschläge 8, 9 so festgelegt, dass die Dämpfungseinrichtung erst wirksam wird, wenn die Frontklappe 1 bzw. der verstellbare Bereich der Frontklappe 1 einen größeren Bereich des Weges von der normalen Schließlage der Frontklappe 1 in die Fußgängerschutzlage zurück gelegt hat. Bei dem Ausführungsbeispiel entspricht der größere Bereich des Weges einem 2/3- bis 3/4-Anteil dieses Weges.

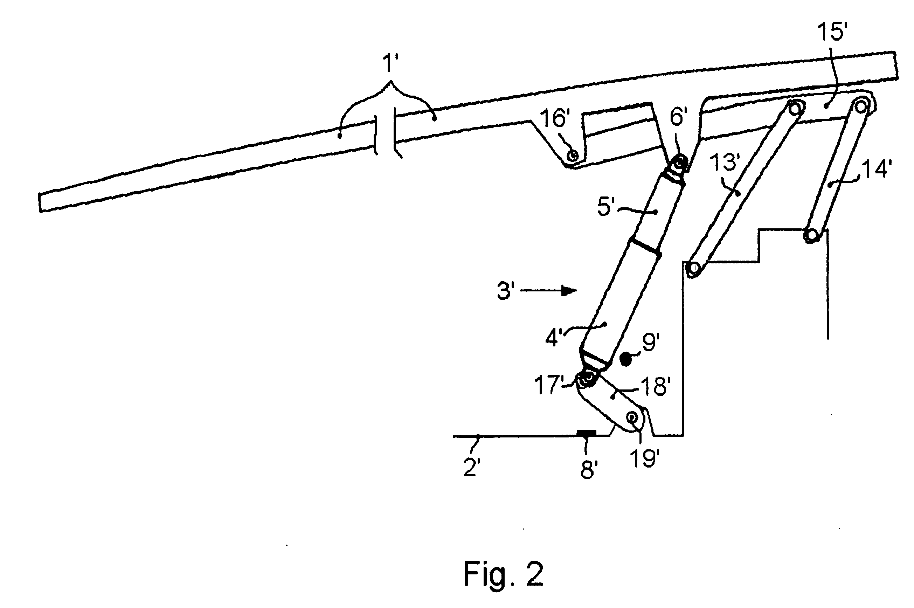

Ein zweites Ausführungsbeispiel der Erfindung ist in Fig. 2 dargestellt, das mit dem ersten Ausführungbeispiel überein stimmende oder vergleichbare Bauteile aufweist, die zur Vermeidung einer wiederholten Beschreibung mit einer gleichen Bezugszahl und zur besseren Unterscheidung bei dem zweiten Ausführungbeispiel mit einem hoch gestellten Zeichen versehen sind.

Bei dem zweiten Ausführungsbeispiel weist das Dämpfungsglied 3' ebenfalls einen nicht dargestellten, in einem Führungszylinder 4' axial verstellbaren Dämpfungskolben auf. Der Führungszylinder 4' ist an einer Anlenkstelle 17' an einem Schwenkhebel 18' angelenkt, der innerhalb eines Schwenkwinkelbereiches derart zwischen Anschlägen 8', 9' frei schwenkbar ist, dass der Verstellweg des Schwenkhebels 18' an der Anlenkstelle 17' in Achsrichtung des Führungszylinders 4' dem vorgegebenen Anfangsverstellweg oder einem Verstellweg entspricht, der den vorgegebenen Anfangsverstellweg der Frontklappe 1' festlegt. Die von dem nicht dargestellten Dämpfungskolben axial durch eine stirnseitige Öffnung im Führungszylinder 4' nach außen geführte Kolbenstange 5' ist wie bei dem ersten Ausführungsbeispiel um eine Querachse 6' schwenkbar an der Frontklappe 1' angelenkt.

Die den Schwenkwinkelbereich des Schwenkhebels 18' begrenzenden Anschläge 8', 9' sind einerseits durch eine Stützwand 8' an der Karosserie 2' des Kraftfahrzeugs und andererseits durch ein Stützelement gebildet, das bei dem Ausführungsbeispiel ein an der Karosserie feststehend angeordneter Bolzen 9' ist. Beide Anschläge 8', 9' sind in einem Abstand von der Schwenkachse 19' des Schwenkhebels 18' angeordnet. Beim Hochstellen der Frontklappe 1' von ihrer normalen Schließlage in die Fußgängerschutzlage durch die Verstelleinrichtung bewirkt die Dämpfungseinrichtung erst dann an der Frontklappe 1' über die Kolbenstange 5' eine Dämpfkraft, wenn der Schwenkhebel 18' an dem Anschlag 9' zur Anlage gekommen ist und die Frontklappe 1' weiter in Richtung ihrer Fußgängerschutzlage verstellt wird.

Die Erfindung ist auch von den beiden Ausführungsbeispielen abweichend ausführbar. Das Dämpfungsglied der Dämpfungseinrichtung kann auf unterschiedliche Weise gebildet sein. Weist das Dämpfungsglied einen in einem Führungszylinder axial verstellbaren Dämpfungskolben auf, kann der Dämpfungskolben oder eine von dem Dämpfungskolben axial durch eine stirnseitige Öffnung im Führungszylinder nach außen geführte Kolbenstange oder der Führungszylinder in einem Außenzylinder axial innerhalb eines dem vorgegebenen Anfangsverstellweg entsprechenden Verstellweges zwischen Anschlägen frei verstellbar sein. In diesem Fall kann ein Bauteil, die Kolbenstange oder der Führungszylinder oder der Außenzylinder, an der Frontklappe oder an einem mit der Frontklappe fest oder verstellbar verbundenen Teil angelenkt sein. Ein anderes Bauteil, die Kolbenstange oder der Führungszylinder oder der Außenzylinder, kann an der Karosserie des Kraftfahrzeugs oder an einem damit fest oder verstellbar verbundenen Anlenkteil angelenkt sein. Der Führungszylinder oder Dämpfungskolben oder eine von dem Dämpfungskolben axial durch eine stirnseitige Öffnung im Führungszylinder nach außen geführte Kolbenstange kann auch an einer Anlenkstelle an einem Schwenkhebel angelenkt sein, der innerhalb eines Schwenkwinkelbereiches derart zwischen Anschlägen frei schwenkbar ist, dass der Verstellweg des Schwenkhebels an der Anlenkstelle in Achsrichtung des Führungszylinders dem vorgegebenen Anfangsverstellweg entspricht. Ein anderes Bauteil, der Führungszylinder oder Dämpfungskolben oder die Kolbenstange, kann an der Frontklappe oder an einem mit der Frontklappe fest oder verstellbar verbundenen Teil angelenkt sein. Ist in einem Führungszylinder ein axial verstellbarer Dämpfungskolben vorgesehen, der zwischen zwei Arbeitsräumen des Führungszylinders angeordnet ist, so kann zumindest ein Arbeitsraum des Führungszylinders ständig druckbelastet sein. Die Verstellkinematik zum Verstellen wenigstens eines Bereiches der normal geschlossenen Frontklappe in die Fußgängerschutzlage kann beliebig gebildet und im vorderen oder hinteren Bereich der Frontklappe beispielsweise in einem Seitenbereich der Frontklappe angeordnet sein. Der vorgegebene Anfangsverstellweg kann vorzugsweise einem größeren oder alternativ beispielsweise kleineren Bereich des Weges der Frontklappe bzw. des in die Fußgängerschutzlage verstellbaren Bereiches der Frontklappe von der Schließlage der Frontklappe in die Fußgängerschutzlage entsprechen. Das Dämpfungsglied ist vorzugsweise so eingestellt, dass das Dämpfungsglied beim Verstellen der geschlossenen Frontklappe in die erhöhte Fußgängerschutzlage durch die Verstelleinrichtung ein Überschwingen der Frontklappe über die Fußgängerschutzlage verhindert. Alternativ kann das Dämpfungsglied so eingestellt sein, dass das Dämpfungsglied beim Verstellen der geschlossenen Frontklappe in die erhöhte Fußgängerschutzlage durch die Verstelleinrichtung ein geringes Überschwingen der Frontklappe über die Fußgängerschutzlage zulässt.

## Patentansprüche

1. Dämpfungseinrichtung an einer Frontklappe (1) eines Kraftfahrzeugs, mit einem zwischen der Karosserie (2) des Kraftfahrzeugs und der Frontklappe (1) angeordneten Dämpfungsglied (3), das so ausgelegt ist, dass das Dämpfungsglied (3) eine durch eine Verstelleinrichtung bewirkte Verlagerung der Frontklappe (1) in eine erhöhte Fußgängerschutzlage erst nach einem vorgegebenen Anfangsverstellweg dämpft, wobei das Dämpfungsglied (3) einen in einem Führungszylinder (4) axial verstellbaren Dämpfungskolben aufweist, und eine von dem Dämpfungskolben axial durch eine stirnseitige Öffnung im Führungszylinder nach außen geführte Kolbenstange (5) in einem Außenzylinder (7) axial innerhalb eines dem vorgegebenen Anfangsverstellweg entsprechenden Verstellweges zwischen Anschlägen (8, 9) frei verstellbar ist, und der Außenzylinder (7) entweder an der Frontklappe bzw. an einem mit der Frontklappe fest oder verstellbar verbundenen Teil oder an der Karosserie (2) des Kraftfahrzeugs bzw. an einem damit fest oder verstellbar verbundenen Anlenkteil angelenkt ist, und die Kolbenstange (5) oder der Führungszylinder an dem anderen Bauteil, entweder an der Frontklappe (1) bzw. an einem mit der Frontklappe fest oder verstellbar verbundenen Teil oder an der Karosserie des Kraftfahrzeugs bzw. an einem damit fest oder verstellbar verbundenen Anlenkteil angelenkt ist, **dadurch gekennzeichnet, dass** entweder die Kolbenstange oder der Führungszylinder (4) in einem Außenzylinder (7) axial innerhalb eines dem vorgegebenen Anfangsverstellweg entsprechenden Verstellweges zwischen Anschlägen (8, 9) frei verstellbar ist, und die Dämpfungswirkung des Dämpfungsgliedes (3) dann einsetzt, wenn das zwischen Anschlägen (8, 9) frei verstellbare Teil, die Kolbenstange oder der Führungszylinder (4), bei einem durch die Verstelleinrichtung bewirkten Anheben der Frontklappe (1) an dem betreffenden Anschlag (9) zur Anlage kommt.

2. Dämpfungseinrichtung an einer Frontklappe (1') eines Kraftfahrzeugs, die von einer Verstelleinrichtung zumindest bereichsweise in eine Fußgängerschutzlage hochstellbar ist, mit einem zwischen der Karosserie (2') des Kraftfahrzeugs und der Frontklappe (1') angeordneten Dämpfungsglied (3'), das so ausgelegt ist, dass das Dämpfungsglied (3') eine durch die Verstelleinrichtung bewirkte Verlagerung der Frontklappe (1') in die Fußgängerschutzlage erst nach einem vorgegebenen Anfangsverstellweg dämpft, wobei das Dämpfungsglied (3') einen in einem Führungszylinder (4') axial verstellbaren Dämpfungskolben aufweist, und der Führungszylinder oder die Kolbenstange (5') an der Frontklappe (1') oder an der Karosserie angelenkt ist, **dadurch gekennzeichnet, dass** der Führungszylinder (4') oder eine von dem Dämpfungskolben axial durch eine stirnseitige Öffnung im Führungszylinder nach außen geführte Kolbenstange an einer Anlenkstelle (17') an einem Schwenkhebel (18') angelenkt ist, der innerhalb eines Schwenkwinkelbereiches derart zwischen Anschlägen (8', 9') frei schwenkbar ist, dass der Verstellweg des Schwenkhebels (18') an der Anlenkstelle (17') in Achsrichtung des Führungszylinders (4') dem vorgegebenen Anfangsverstellweg entspricht, und der Führungszylinder oder die Kolbenstange (5') entweder an der Frontklappe (1') oder an der Karosserie und der Schwenkhebel (18') an dem anderen Teil, entweder an der Karosserie (2') oder an der Frontklappe angelenkt sind.

3. Dämpfungseinrichtung nach Patentanspruch 1, **dadurch gekennzeichnet, dass** wenigstens ein Anschlag (8, 9) durch einen stirnseitigen Boden (8) des Außenzylinders (4) und/oder durch eine axiale Stützfläche eines von einer Innenwand des Außenzylinders (7) radial nach innen gerichteten Vorsprunges (9) gebildet ist.

4. Dämpfungseinrichtung nach Patentanspruch 2, **dadurch gekennzeichnet, dass** wenigstens ein Anschlag (8', 9') durch eine Stützwand (8') an der Karosserie (2') des Kraftfahrzeugs oder an einem mit der Karosserie fest oder verstellbar verbundenen Stützelement (9') gebildet ist, und der Anschlag (8', 9') in einem Abstand von der Schwenkachse (19') des Schwenkhebels (18') angeordnet ist.

5. Dämpfungseinrichtung nach einem der Patentansprüche 1 bis 4, **dadurch gekennzeichnet, dass** der Dämpfungskolben zwischen zwei Arbeitsräumen des Führungszylinders (4, 4') angeordnet ist und wenigstens eine Drosselöffnung im Dämpfungskolben die beiden Arbeitsräume verbindet.

6. Dämpfungseinrichtung nach einem der Patentansprüche 1 bis 5, **dadurch gekennzeichnet, dass** die beiden Arbeitsräume des Führungszylinders (4, 4') von einer Druckeinrichtung und/oder von einem Druckspeicher druckbelastet oder druckbelastbar sind, oder zusätzlich der Dämpfungskolben als Differenzdruckkolben ausgebildet ist, der bei einer gemeinsamen Druckbelastung der Arbeitsräume die von dem Dämpfungskolben abstehende Kolbenstange (5, 5') axial nach außen belastet.

7. Dämpfungseinrichtung nach Patentanspruch 5 oder 6, **dadurch gekennzeichnet, dass** zumindest ein Arbeitsraum des Führungszylinders (4, 4') ständig druckbelastet ist.

8. Dämpfungseinrichtung nach einem der Patentansprüche 1 bis 7, **dadurch gekennzeichnet, dass** das mit der Frontklappe verstellbar verbundene Teil ein Lenker der Verstellkinematik ist, mit der die beispielsweise bereichsweise von wenigstens einem Schloss verriegelte Frontklappe zumindest bereichsweise in die erhöhte Fußgängerschutzlage verstellbar ist, in der eine die Frontklappe stützende Federungs- und/oder Dämpfungseinrichtung beispielsweise einen Aufprall eines Fußgängers bei einer Verstellbewegung der Frontklappe nach unten abfedern und/oder dämpfen kann.

9. Dämpfungseinrichtung nach einem der Patentansprüche 1 bis 8, **dadurch gekennzeichnet, dass** der vorgegebene Anfangsverstellweg einem größeren Bereich des Weges der Frontklappe bzw. des in die Fußgängerschutzlage verstellbaren Bereiches der Frontklappe (1, 1') von der Schließlage der Frontklappe (1, 1') in die Fußgängerschutzlage entspricht.

10. Dämpfungseinrichtung nach einem der Patentansprüche 1 bis 9, **dadurch gekennzeichnet, dass** das Dämpfungsglied (3, 3') so eingestellt ist, dass das Dämpfungsglied (3, 3') beim Verstellen der geschlossenen Frontklappe (1, 1') in die erhöhte Fußgängerschutzlage ein Überschwingen der Frontklappe (1, 1') über die Fußgängerschutzlage verhindert oder allenfalls kurzzeitig ein geringes Überschwingen über die Fußgängerschutzlage zulässt.

11. Dämpfungseinrichtung nach einem der Patentansprüche 1 bis 10, **dadurch gekennzeichnet, dass** die Dämpfungseinrichtung zumindest in einem hinteren oder vorderen Seitenbereich der Frontklappe (1, 1') angeordnet ist.

## Claims

1. A damping device on a front flap (1) of a motor vehicle, comprising a damping element (3) disposed between the vehicle body (2) and the flap (1) and designed so that the damping element (3) travels a preset initial distance before damping the movement of the front flap (1), produced by an adjusting device, into a raised pedestrian-protecting position, wherein the damping element (3) comprises a piston axially adjustable in a guide cylinder (4) and a piston rod (5) guided outwards by the damping piston axially through an end opening in the guide cylinder, is freely adjustable in an outer cylinder (7) between stops (8, 9), axially inside a distance corresponding to the preset initial adjustment travel, and the outer cylinder (7) is pivoted either to the front flap or to a part fixed or adjustably connected to the front flap or to the body (2) of the motor vehicle or to a pivotable part connected or fixed thereto and the piston rod (5) or the guide cylinder is pivoted to the other component, either to the front flap (1) or to a part fixed or adjustably connected to the front flap or to the vehicle body or to a pivoting part fixed or adjustably connected thereto, **characterised in that** either the piston rod or the guide cylinder (4) is freely adjustable in an outer cylinder (7) between stops (8, 9) axially within a travel distance corresponding to the set initial adjustment travel, and the damping effect of the element (3) begins when the part freely adjustable between stops (8, 9) or the piston rod or the guide cylinder (4) abuts the respective stop (9) when the front flap (1) is raised by the adjusting device.

2. A damping device on a front flap (1') of a motor vehicle, vertically movable at least in part into a pedestrian-protecting position by an adjusting device, comprising a damping element (3') disposed between the vehicle body (2') and the front flap (1'), and designed so that the damping element (3') moves through a set initial distance before damping the movement of the front flap (1') into the pedestrian-protecting position produced by the adjusting device, wherein the damping element (3') comprises a piston axially adjustable in a guide cylinder (4') and the guide cylinder or the piston rod (5') is pivoted to the front flap (1') or to the body, **characterised in that** the guide cylinder (4') or a piston rod guided outwardly and axially through an end opening in the guide cylinder by the damping piston is pivoted at a place (17') to a lever (18') which is pivotable through an angle between stops (8', 9') so that the distance travelled by the lever (18') at the place (17') in the axial direction of the guide cylinder (4') is equal to the set initial adjustment travel, and the guide cylinder or the piston rod (5') is pivoted either to the front flap (1') or to the body and the lever (18') is pivoted to the other part, either to the body (2') or to the front flap.

3. A damping device according to claim 1, **characterised in that** at least one stop (8, 9) is in the form of a plate (8) on the end of the outer cylinder (4) and/or of an axial abutting surface on a projection (9) directed radially inwards by an inner wall of the outer cylinder (7).

4. A damping device according to claim 2, **characterised in that** at least one stop (8', 9') is in the form of an abutting wall (8') on the body (2') of the vehicle or on an abutting element (9') fixed or adjustably connected to the body, and the stop (8', 9') is disposed at a distance from the shaft (19') round which the lever (18') pivots.

5. A damping device according to any of claims 1 to 4, **characterised in that** the damping piston is disposed between two working chambers in the guide cylinder (4, 4') and at least one throttle opening in the damping piston connects the two working chambers.

6. A damping device according to any of claims 1 to 5, **characterised in that** the two working chambers of the guide cylinder (4, 4') are or can be pressurised by a pressure device and/or a pressure accumulator, or additionally the damping piston is a differential-pressure piston which axially and outwardly biases the piston rod (5, 5') projecting from the damping piston when the working chambers are simultaneously pressurised.

7. A damping device according to claim 5 or claim 6, **characterised in that** at least one working chamber of the guide cylinder (4, 4') is continuously pressurised.

8. A damping device according to any of claims 1 to 7, **characterised in that** the part adjustably connected to the front flap is a control arm of the adjusting mechanism whereby the front flap, e.g. partly locked by at least one lock, is at least partly movable into the raised pedestrian-protecting position in which a cushioning and/or damping device abutting the front flap can downwardly cushion and/or absorb the shock in the event e.g. of a collision with a pedestrian when the front flap is being adjusted downwards.

9. A damping device according to any of claims 1 to 8, **characterised in that** the set initial adjustment travel corresponds to a larger portion of the travel, from the closed position of the front flap (1, 1') into the pedestrian-protecting position, of the front flap or of the region of the front flap (1, 1') movable into the passenger-protecting position.

10. A damping device according to any of claims 1 to 9, **characterised in that** the damping element (3, 3') is adjusted so that when the closed front flap (1, 1') is moved into the raised pedestrian-protecting position the damping element (3, 3') prevents the front flap (1, 1') overshooting beyond the pedestrian-protecting position or at most permits a brief overshoot beyond the passenger-protecting position.

11. A damping device according to any of claims 1 to 10, **characterised in that** the damping device is disposed at least in a rear or front side region of the front flap (1, 1').

## Revendications

1. Installation d'amortissement du capot (1) d'un véhicule automobile comportant un organe d'amortissement (3) installé entre la carrosserie (2) du véhicule et le capot (1), cet organe d'amortissement (3) étant conçu pour amortir un déplacement du capot (1) produit par une installation d'actionnement dans une position de protection de piéton, relevée, seulement après une course de déplacement initial donnée,
* l'organe d'amortissement (3) ayant un piston d'amortissement réglable axialement dans un cylindre de guidage (4) et une tige de piston (5) guidée vers l'extérieur, axialement à partir du piston amortisseur à travers un orifice côté frontal du cylindre de guidage dans un cylindre extérieur (7), axialement à l'intérieur d'une course d'actionnement correspondant à la course d'actionnement initial prédéfinie entre des butées (8, 9), librement, et
* le cylindre extérieur (7) est articulé soit au capot ou à une pièce solidaire du capot ou relié de manière réglable au capot ou à la carrosserie (2) du véhicule ou à une pièce d'induit reliée de manière solidaire ou réglable à la carrosserie et la tige de piston (5) ou le cylindre de guidage est articulé à l'autre pièce, soit au capot (1), soit à une pièce solidaire du capot ou reliée à celui-ci ou à la carrosserie du véhicule ou une pièce d'articulation reliée de manière solidaire ou réglable,
installation **caractérisée en ce que**
soit la tige de piston ou le cylindre de guidage (4) sont réglables librement dans un cylindre extérieur (7), axialement dans la course de réglage entre les butées (8, 9) et qui correspond au réglage initial prédéfini, et
l'effet d'amortissement de l'élément amortisseur (3) ne s'applique que si la pièce réglable librement entre les butées (8, 9) pour un soulèvement du capot (1) produit par l'installation de réglage, vient s'appuyer contre la butée (9) correspondante.

2. Installation d'amortissement d'un capot (1') d'un véhicule automobile qui peut être relevé en position de protection de piéton, au moins par zone par une installation de réglage, et comprenant un organe d'amortissement (3') installé entre la carrosserie (2') du véhicule et le capot (1'), cet organe d'amortissement (3') étant conçu de sorte que par le déplacement du capot (1') produit par l'installation de réglage dans la position de protection des piétons avec amortissement se fasse seulement après une course de réglage initial donnée,
* l'organe d'amortissement (3') ayant un piston amortisseur réglable axialement dans un cylindre de guidage (4') et le cylindre de guidage ou la tige de piston (5') sont articulés au capot (1') ou à la carrosserie,
installation **caractérisée en ce que**
le cylindre de guidage (4') ou une ouverture côté frontal dans le cylindre de guidage et qui est dirigé axialement vers l'extérieur est articulé par un point d'articulation (17') à un levier oscillant (18') qui peut osciller librement dans une plage d'angle de pivotement entre les butées (8', 9') de façon que la course de réglage du levier pivotant (18') au point d'articulation (17') dans la direction axiale du cylindre de guidage (4') correspond à la course de réglage initial prédéfinie et le cylindre de guidage ou la tige de piston (5') sont articulés soit au capot (1'), soit à la carrosserie et le levier pivotant (18') est articulé à l'autre partie, soit à la carrosserie (2'), soit au volet frontal.

3. Installation d'amortissement selon la revendication 1,
**caractérisée par**
au moins une butée (8, 9) formée par le fond (8) côté frontal du cylindre extérieur (4) et/ou par une surface d'appui axiale d'une partie en saillie (9) dirigée radialement vers l'intérieur et formée par la paroi intérieure du cylindre extérieur (7).

4. Installation d'amortissement selon la revendication 2,
**caractérisée en ce qu'**
au moins une butée (8', 9') est formée par une paroi d'appui (8') sur la carrosserie (2') du véhicule automobile ou avec un élément d'appui (9') relié solidairement de manière fixe ou réglable à la carrosserie et la butée (8', 9') est à une distance de l'axe de pivotement (19') qui correspond à celle du levier oscillant (18').

5. Installation d'amortissement selon l'une des revendications 1 à 4,
**caractérisée en ce que**
le piston amortisseur est installé entre deux chambres de travail du cylindre de guidage (4, 4') et au moins un orifice d'étranglement réalisé dans le piston d'amortissement relie les deux chambres de travail.

6. Installation d'amortissement selon l'une des revendications 1 à 5,
**caractérisée en ce que**
les deux chambres de travail du cylindre de guidage (4, 4') sont ou peuvent être sollicitées en pression par une installation de pression et/ou un accumulateur de pression ou en plus le piston amortisseur réalisé comme piston de pression différentiel qui, pour une sollicitation en pression, commune, des chambres de travail, est sollicité axialement vers l'extérieur par le piston amortisseur dépassant de la tige de piston (5, 5').

7. Installation d'amortissement selon la revendication 5 ou 6,
**caractérisée en ce qu'**
au moins une chambre de travail du cylindre de guidage (4, 4') est en permanence sollicitée en pression.

8. Installation d'amortissement selon l'une des revendications 1 à 7,
**caractérisée en ce que**
la pièce reliée de manière réglable au volet frontal est le guidon d'une cinématique de réglage qui permet un pré-réglage, par exemple par zone, entre au moins une serrure et le capot frontal verrouillé, pour être déplacée au moins par zone dans une position de protection de piéton, relevée, dans laquelle l'installation de ressort et/ou d'amortissement qui soutient le capot frontal, par exemple en cas de choc d'un passager lors d'une course de réglage du capot descende et/ou est amortie.

9. Installation d'amortissement selon l'une des revendications 1 à 8,
**caractérisée en ce que**
la course de réglage initial prédéfinie correspond à une plage plus importante de la course du capot ou de la plage réglable en fonction des piétons, du capot (1, 1') qui peut être mis en position de protection des piétons passant de la position de fermeture du capot (1, 1') à la position de protection des piétons.

10. Installation d'amortissement selon l'une des revendications 1 à 9,
**caractérisée en ce que**
l'organe d'amortissement (3, 3') est réglé pour que lors du déplacement du capot fermé (1, 1') vers une position relevée de protection des piétons, il (3, 3') évite le dépassement du capot (1, 1') au-delà de la position du piéton ou au plus n'autorise que brièvement un faible dépassement de la position de protection des piétons.

11. Installation d'amortissement selon l'une des revendications 1 à 10,
**caractérisée en ce que**
l'installation d'amortissement est prévue dans au moins une zone arrière ou une zone latérale avant du capot (1, 1').
